(19) Europäisches Patentamt / European Patent Office / Office européen des brevets

(11) **EP 3 559 284 B1**

(12) **EUROPEAN PATENT SPECIFICATION**

(45) Date of publication and mention
of the grant of the patent:
**24.05.2023 Bulletin 2023/21**

(21) Application number: **17826577.3**

(22) Date of filing: **20.12.2017**

(51) International Patent Classification (IPC):
***C21D 9/573*** *(2006.01)*     ***C21D 11/00*** *(2006.01)*

(52) Cooperative Patent Classification (CPC):
**C21D 9/573; C21D 8/0236; C21D 9/56;
C21D 9/562; C21D 9/5735; C21D 11/00;
C21D 11/005;** C21D 2211/00

(86) International application number:
**PCT/IB2017/058186**

(87) International publication number:
**WO 2018/116191 (28.06.2018 Gazette 2018/26)**

(54) **A METHOD FOR MANUFACTURING A THERMALLY TREATED STEEL SHEET**

VERFAHREN ZUR HERSTELLUNG EINES THERMISCH BEHANDELTEN STAHLBLECHS

PROCÉDÉ DE FABRICATION D'UNE TÔLE D'ACIER TRAITÉE THERMIQUEMENT

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Validation States:
**MA**

(30) Priority: **20.12.2016 PCT/IB2016/001786**

(43) Date of publication of application:
**30.10.2019 Bulletin 2019/44**

(73) Proprietor: **ArcelorMittal
1160 Luxembourg (LU)**

(72) Inventor: **BONNET, Frédéric
54150 Avril (FR)**

(74) Representative: **Lavoix
2, place d'Estienne d'Orves
75441 Paris Cedex 09 (FR)**

(56) References cited:
**EP-A1- 2 290 112       WO-A1-2010/049600
CN-A- 102 851 474      JP-A- H1 036 923
JP-A- 2008 007 809     JP-A- 2008 161 924**

**Description**

The present invention relates to a method for manufacturing a thermally treated steel sheet having a chemical steel composition and a microstructure $m_{target}$ comprising from 0 to 100% of at least one phase chosen among: ferrite, martensite, bainite, pearlite, cementite and austenite, in a heat treatment line. The invention is particularly well suited for the manufacture of automotive vehicles.

It is known to use coated or bare steel sheets for the manufacture of automotive vehicles. A multitude of steel grades are used to manufacture a vehicle. The choice of steel grade depends on the final application of the steel part. For example, IF (Interstitial-Free) steels can be produced for an exposed part, TRIP (Transformation-Induced Plasticity) steels can be produced for seat and floor cross members or A-pillars and DP (Dual Phase) steels can be produced for rear rails or roof cross member.

During the production of theses steels, crucial treatments are performed on the steel in order to obtain the desired part having excepted mechanical properties for one specific application. Such treatments can be, for example, a continuous annealing before deposition of a metallic coating or a quenching and partitioning treatment. Usually, the treatment to perform is selected in a list of known treatments, this treatment being chosen depending on the steel grade.

The patent application WO2010/049600 relates to a method of using an installation for heat treating a continuously moving steel strip, comprising the steps of: selecting a cooling rate of the steel strip depending on, among others metallurgical characteristics at the entry and metallurgical characteristics required at the exit of the installation; enter the geometric characteristics of the band; calculate power transfer profile along the steel route in the light with the line speed; determine desired values for the adjustment parameters of the cooling section and adjust the power transfer of the cooling devices of the cooling section according to said monitoring values.

However, this method is only based on the selection and the application of well-known cooling cycles. It means that for one steel grade, for example TRIP steels, there is a huge risk that the same cooling cycle is applied even if each TRIP steel has its own characteristics comprising chemical composition, microstructure, properties, surface texture, etc. Thus, the method does not take into account the real characteristics of the steel. It allows for the non-personalized heat treatment of a multitude of steel grades.

Consequently, the heat treatment is not adapted to one specific steel and therefore at the end of the treatment, the desired properties are not obtained. Moreover, after the treatment, the steel can have a big dispersion of the mechanical properties. Finally, even if a wide range of steel grades can be manufactured, the quality of the treated steel is poor.

The patent application JPH1036923 describes a method of annealing in a furnace wherein, when processing is performed under special conditions different from preset predetermined manufacturing conditions, the manufacturing conditions are updated and transmitted. The update information and the identification information corresponding to the update information are set in advance.

The patent application WO 2010/049600 describes a furnace for the thermal processing of a continuously-running rolled steel strip, said furnace comprising a preheating section, a temperature-maintaining section and a cooling section comprising, a first quenching device that does not oxidise the strip and has an adjustable transfer power and a second quenching device that oxidises the strip and has an adjustable transfer power. The furnace comprises a control and actuation means for adjusting the transfer power of each of the first and second quenching devices based on a desired cooling rate and on the size characteristics of the strip.

Thus, the object of the invention is to solve the above drawbacks by providing a method for manufacturing a thermally treated steel sheet having a specific chemical steel composition and a specific microstructure $m_{target}$ to reach in a heat treatment line. In particular, the object is to perform a treatment adapted to each steel sheet, such treatment being calculated very precisely in the lowest calculation time possible in order to provide a steel sheet having the excepted properties, such properties having the minimum of properties dispersion possible.

This object is achieved by providing a method according to claim 1. The method can also comprise any characteristics of claims 2 to 16.

Other characteristics and advantages of the invention will become apparent from the following detailed description of the invention.

To illustrate the invention, various embodiments and trials of non-limiting examples will be described, particularly with reference to the following Figures:

Figure 1 illustrates an example of the method according to the present invention.
Figure 2 illustrates an example wherein a continuous annealing of a steel sheet comprising a heating step, a soaking step, a cooling step and an overaging step is performed.
Figure 3 illustrates a preferred embodiment according to the invention.
Figure 4 illustrates an example according to the invention wherein a continuous annealing is performed on a steel sheet before the deposition of a coating by hot-dip.

Figure 5 illustrates an example wherein a quenching & partitioning treatment is performed on a steel sheet.

The following terms will be defined:

- CC: chemical composition in weight percent,
- $m_{target}$: targeted value of the microstructure,
- $m_{standard}$: the microstructure of the selected product,
- $P_{target}$: targeted value of a mechanical property,
- $m_i$: initial microstructure of the steel sheet,
- X: phase fraction in weight percent,
- T: temperature in degree Celsius (°C),
- t: time (s),
- s: seconds,
- UTS: ultimate tensile strength (MPa),
- YS: yield stress (MPa),
- metallic coating based on zinc means a metallic coating comprising above 50% of zinc,
- metallic coating based on aluminum means a metallic coating comprising above 50% of aluminum and
- thermal path, $TP_{standard}$, $TP_{target}$, $TP_x$ and $TP_{xint}$ comprise a time, a temperature of the thermal treatment and at least one rate chosen from: a cooling, an isotherm or a heating rate. The isotherm rate has a constant temperature.

The designation "steel" or "steel sheet" means a steel sheet, a coil, a plate having a composition allowing the part to achieve a tensile strength up to 2500 MPa and more preferably up to 2000MPa. For example, the tensile strength is above or equal to 500 MPa, preferably above or equal to 1000 MPa, advantageously above or equal to 1500 MPa. A wide range of chemical composition is included since the method according to the invention can be applied to any kind of steel.

The invention relates to a method for manufacturing a thermally treated steel sheet having a chemical steel composition and a microstructure $m_{target}$ comprising from 0 to 100% of at least one phase chosen among: ferrite, martensite, bainite, pearlite, cementite and austenite, in a heat treatment line comprising:

A. a preparation step comprising:

1) a selection sub step wherein the chemical composition and $m_{target}$ are compared to a list of predefined products, which microstructure includes predefined phases and predefined proportion of phases, in order to select a product having a microstructure $m_{standard}$ closest to $m_{target}$ and a predefined thermal path $TP_{standard}$ to obtain $m_{standard}$,

2) a calculation sub step wherein at least two thermal path $TP_x$, each $TP_x$ corresponding to a microstructure $m_x$ obtained at the end of $TP_x$, are calculated based on the selected product of step A.1) and $TP_{standard}$ and $m_i$ to reach $m_{target}$, the thermal enthalpy H released or consumed between $m_i$ and $m_{target}$ being calculated such that:

$$H_x = (X_{ferrite} * H_{ferrite}) + (X_{martensite} * H_{martensite}) + (X_{bainite} * H_{bainite}) +$$

$$(X_{pearlite} * H_{pearlite}) + (H_{cementite} * X_{cementite}) + (H_{austenite} * X_{austenite})$$

X being a phase fraction, all thermal cycle $TP_x$ being calculated such that:

$$T(t + \Delta t) = T(t) + \frac{(\varphi_{Convection} + \varphi_{radiance})}{\rho \cdot Ep \cdot C_{pe}} \Delta t \pm \frac{H_x}{C_{pe}}$$

with Cpe: the specific heat of the phase (J·kg$^{-1}$·K$^{-1}$), $\rho$: the density of the steel (g.m$^{-3}$), Ep: thickness of the steel (m), $\varphi$: the heat flux (convective + radiative in W), $H_x$ (J.Kg$^{-1}$), T: temperature (°C) and t: time (s),

3) a selection sub step wherein one thermal path $TP_{target}$ to reach $m_{target}$ is selected, $TP_{target}$ being chosen from $TP_x$ and being selected such that $m_x$ is the closest to $m_{target}$,

B. a thermal treatment step wherein $TP_{target}$ is performed on the steel sheet.

Without willing to be bound by any theory, it seems that when the method according to the present invention is applied, it is possible to obtain a personalized heat treatment for each steel sheet to treat in a short calculation time. Indeed, the method according to the present invention allows for a precise and specific heat treatment which takes into account $m_{target}$, more precisely the proportion of all the phases along the treatment and $m_i$ (including the microstructure dispersion along the steel sheet). Indeed, the method according to the present invention takes into account for the calculation the thermodynamically stable phases, i.e. ferrite, austenite, cementite and pearlite, and the thermodynamic metastable phases, i.e. bainite and martensite. Thus, a steel sheet having the expected properties with the minimum of properties dispersion possible is obtained.

Preferably, the microstructure $m_{target}$ to reach comprises:

- 100% of austenite,
- from 5 to 95% of martensite, from 4 to 65% of bainite, the balance being ferrite,
- from 8 to 30% of residual austenite, from 0.6 to 1.5% of carbon in solid solution, the balance being ferrite, martensite, bainite, pearlite and/or cementite,
- from 1% to 30% of ferrite and from 1% to 30% of bainite, from 5 and 25% of austenite, the balance being martensite ,
- from 5 to 20% of residual austenite, the balance being martensite,
- ferrite and residual austenite,
- residual austenite and intermetallic phases,
- from 80 to 100% of martensite and from 0 to 20% of residual austenite
- 100% martensite,
- from 5 to 100% of pearlite and from 0 to 95% of ferrite and
- at least 75% of equiaxed ferrite, from 5 to 20% of martensite and bainite in amount less than or equal to 10%.

Advantageously, during the selection sub step A.1), the chemical composition and $m_{target}$ are compared to a list of predefined products. The predefined products can be any kind of steel grade. For example, they include Dual Phase DP, Transformation Induced Plasticity (TRIP), Quenched & Partitioned steel (Q&P), Twins Induced Plasticity (TWIP), Carbide Free Bainite (CFB), Press Hardening Steel (PHS), TRIPLEX, DUPLEX and Dual Phase High Ductility (DP HD).

The chemical composition depends on each steel sheet. For example, the chemical composition of a DP steel can comprise:

$0.05 < C < 0.3\%$,
$0.5 \leq Mn < 3.0\%$,
$S \leq 0.008\%$,
$P \leq 0.080\%$,
$N \leq 0.1\%$,
$Si \leq 1.0\%$,

the remainder of the composition making up of iron and inevitable impurities resulting from the development.

Each predefined product comprises a microstructure including predefined phases and predefined proportion of phases. Preferably, the predefined phases in step A.1) are defined by at least one element chosen from: the size, the shape and the chemical composition. Thus, $m_{standard}$ includes a predefined phase in addition to predefined proportions of phase. Advantageously, mi, $m_x$, $m_{target}$ include phases defined by at least one element chosen from: the size, the shape and the chemical composition. According to the invention, the predefined product having a microstructure $m_{standard}$ closest to $m_{target}$ is selected as well as thermal path $TP_{standard}$ to reach $m_{standard}$. $m_{standard}$ comprises the same phases as $m_{target}$. Preferably, $m_{standard}$ also comprises the same phases proportions as $m_{target}$.

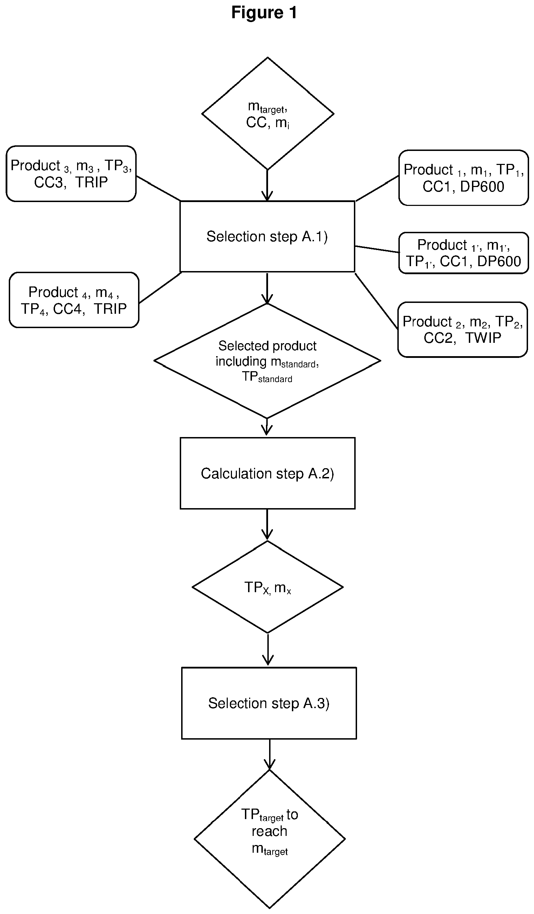

Figure 1 illustrates an example according to the invention wherein the steel sheet to treat has the following CC in weight: 0.2% of C, 1.7% of Mn, 1.2% of Si and of 0.04% Al. $m_{target}$ comprises 15% of residual austenite, 40% of bainite and 45% of ferrite, from 1.2% of carbon in solid solution in the austenite phase. According to the invention, CC and $m_{target}$ are selected and compared to a list of predefined products chosen from among products 1 to 4. CC and $m_{target}$ correspond to product 3 or 4, such product being a TRIP steel.

Product 3 has the following $CC_3$ in weight: 0.25% of C, 2.2% of Mn, 1.5% of Si and 0.04% of Al. $m_3$ comprises 12% of residual austenite, 68% of ferrite and 20% of bainite, from 1.3% of carbon in solid solution in the austenite phase.

Product 4 has the following $CC_4$ in weight: 0.19% of C, 1.8% of Mn, 1.2% of Si and 0.04% of Al. $m_4$ comprises 12% of residual austenite, 45% of bainite and 43 % of ferrite, from 1.1% of carbon in solid solution in the austenite phase.

Product 4 has a microstructure closest to $m_{target}$ since it has the same phases as $m_{target}$ in the same proportions.

As shown in Figure 1, two predefined products can have the same chemical composition CC and different microstructures. Indeed, $Product_1$ and $Product_{1'}$ are both DP600 steels (Dual Phase having an UTS of 600MPa). One

difference is that $Product_1$ has a microstructure $m_i$ and $Product_{1'}$ has a different microstructure $m_{1'}$. The other difference is that $Product_1$ has a YS of 360MPa and $Product_{1'}$ has a YS of 420MPa. Thus, it is possible to obtain steel sheets having different compromise UTS/YS for one steel grade.

During the calculation sub step A.2), at least two thermal paths $TP_x$ are calculated based on the selected product of step A.1) and $m_i$ to reach $m_{target}$. The calculation of $TP_x$ takes into account the thermal behavior and metallurgical behavior of the steel sheet when compared to the conventional methods wherein only the thermal behavior is considered. In the example of Figure 1, product 4 is selected because $m_4$ is the closest to $m_{target}$ and $TP_4$ is selected, $m_4$ and $TP_4$ corresponding respectively to $m_{standard}$ and $TP_{standard}$.

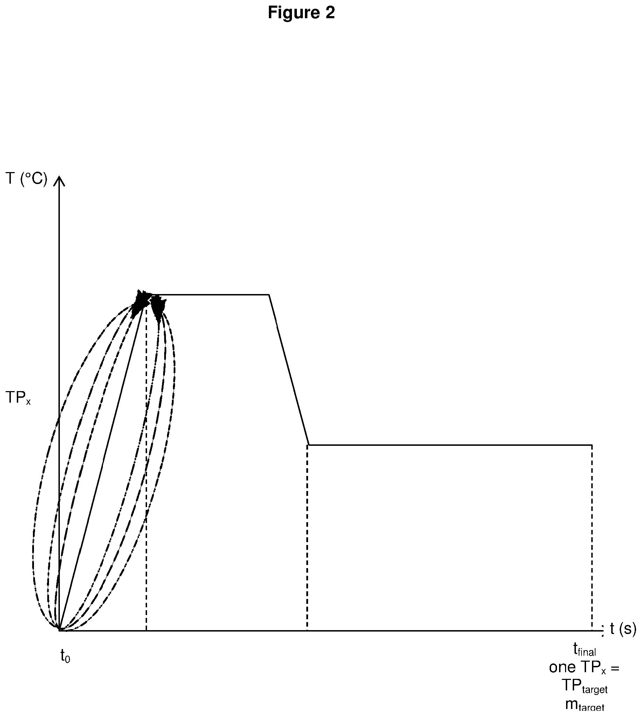

Figure 2 illustrates a continuous annealing of a steel sheet comprising a heating step, a soaking step, a cooling step and an overaging step. A multitude of $TP_x$ is calculated to reach $m_{target}$ as shown only for the heating step in Figure 2. In this example, $TP_x$ are calculated along the all continuous annealing (not shown).

Preferably, at least 10 $TP_x$ are calculated, more preferably at least 50, advantageously at least 100 and more preferably at least 1000. For example, the number of calculated $TP_x$ is between 2 and 10000, preferably between 100 and 10000, more preferably between 1000 and 10000.

In step A.3), one thermal path $TP_{target}$ to reach $m_{target}$ is selected. $TP_{target}$ is chosen from $TP_x$ such that $m_x$ is the closest to $m_{target}$. Thus, in Figure 1, $TP_{target}$ is chosen from a multitude of $TP_x$. Preferably, the differences between proportions of phase present in $m_{target}$ and $m_x$ is $\pm 3$ %.

In step A.2), the thermal enthalpy H released or consumed between $m_i$ and $m_{target}$ is calculated such that:

$$H_x = (X_{ferrite} * H_{ferrite}) + (X_{martensite} * H_{martensite}) + (X_{bainite} * H_{bainite}) + (X_{pearlite} *$$

$$H_{pearlite}) + (H_{cementite} \underline{\vcenter{*}} X_{cementite}) + (H_{austenite} \underline{\vcenter{*}} X_{austenite})$$

X being a phase fraction.

Without willing to be bound by any theory, H represents the energy released or consumed along the all thermal path when a phase transformation is performed. It is believed that some phase transformations are exothermic and some of them are endothermic. For example, the transformation of ferrite into austenite during a heating path is endothermic whereas the transformation of austenite into pearlite during a cooling path is exothermic.

In step A.2), the all thermal cycle $TP_x$ is calculated such that:

$$T(t + \Delta t) = T(t) + \frac{(\varphi_{Convection} + \varphi_{radiance})}{\rho \cdot Ep \cdot C_{pe}} \Delta t \pm \frac{Hx}{C_{pe}}$$

with $C_{pe}$: the specific heat of the phase ($J \cdot kg^{-1} \cdot K^{-1}$), $\rho$: the density of the steel ($g.m^{-3}$), Ep: the thickness of the steel (m), $\varphi$: the heat flux (convective and radiative in W), $H*$ ($J.kg^{-1}$), T: temperature (°C) and t: time (s).

Preferably, in step A.2), at least one intermediate steel microstructure $m_{xint}$ corresponding to an intermediate thermal path $TP_{xint}$ and the thermal enthalpy $H_{xint}$ are calculated. In this case, the calculation of $TP_x$ is obtained by the calculation of a multitude of $TP_{xint}$. Thus, preferably, $TP_x$ is the sum of all $TP_{xint}$ and $H_x$ is the sum of all $H_{xint}$. In this preferred embodiment, $TP_{xint}$ is calculated periodically. For example, it is calculated every 0.5 seconds, preferably 0.1 seconds or less.

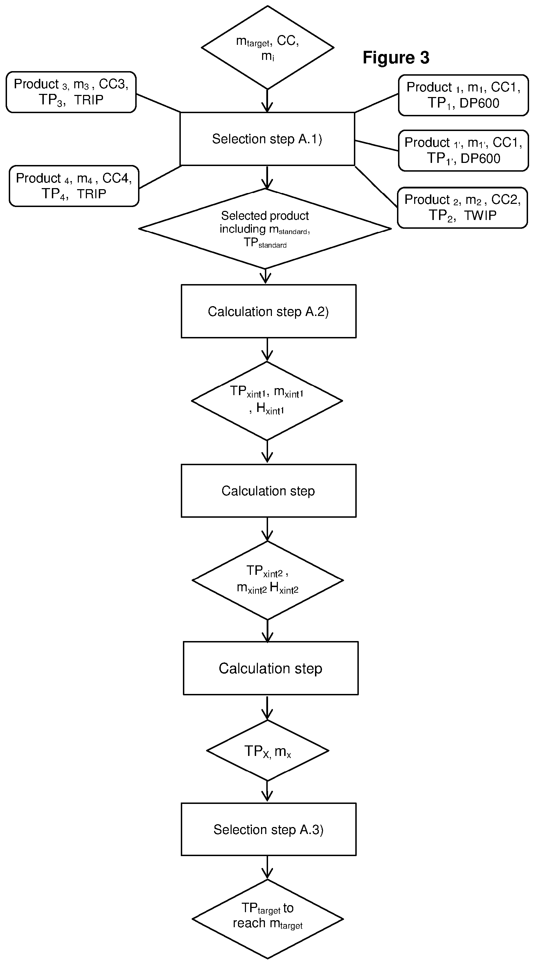

Figure 3 illustrates a preferred embodiment wherein in step A.2), $m_{int1}$ and $m_{int2}$ corresponding respectively to $TP_{xint1}$ and $TP_{xint2}$ as well as $H_{xint1}$ and $H_{xint2}$ are calculated. $H_x$ during the all thermal path is determined to calculate $TP_x$.

In a preferred embodiment, before step A.1), at least one targeted mechanical property $P_{target}$ chosen among yield strength YS, Ultimate Tensile Strength UTS, elongation, hole expansion, formability is selected. In this embodiment, preferably, $m_{target}$ is calculated based on $P_{target}$.

Without willing to be bound by any theory, it is believed that the characteristics of the steel sheet are defined by the process parameters applied during the steel production. Thus, advantageously, in step A.2), the process parameters undergone by the steel sheet before entering the heat treatment line are taken into account to calculate $TP_x$. For example, the process parameters comprise at least one element chosen from among: a final rolling temperature, a run out table cooling path, a coiling temperature, a coil cooling rate and cold rolling reduction rate.

In another embodiment, the process parameters of the treatment line that the steel sheet will undergo in the heat treatment line are taken into account to calculate $TP_x$. For example, the process parameters comprise at least one element chosen from among: the line speed, a specific thermal steel sheet temperature to reach, heating power of the heating sections, a heating temperature and a soaking temperature, cooling power of the cooling sections, a cooling temperature, an overaging temperature.

Preferably, the thermal path, $TP_x$, $TP_{xint}$, $TP_{standard}$ or $TP_{target}$ comprise at least one treatment chosen from: a heating, an isotherm or a cooling treatment. For example, the thermal path can be a recrystallization annealing, a press hardening path, a recovery path, an intercritical or full austenitic annealing, a tempering or partitioning path, an isothermal path or a quenching path.

Preferably, a recrystallization annealing is performed. The recrystallization annealing comprises optionally a pre-heating step, a heating step, a soaking step, a cooling step and optionally an equalizing step. In this case, it is performed in a continuous annealing furnace comprising optionally a pre-heating section, a heating section, a soaking section, a cooling section and optionally an equalizing section. Without willing to be bound by any theory, it is believed that the recrystallization annealing is the thermal path the more difficult to handle since it comprises many steps to take into account comprising cooling and heating steps.

Preferably, every time a new steel sheet enters into the heat treatment line, a new calculation step A.2) is automatically performed based on the selection step A.1) performed beforehand. Indeed, the method according to the present invention adapts the thermal path $TP_{target}$ to each steel sheet even if the same steel grade enters in the heat treatment line since the real characteristics of each steel often differs. The new steel sheet can be detected and the new characteristics of the steel sheet are measured and are pre-selected beforehand. For example, a detector detects the welding between two coils.

In this preferred embodiment, an adaptation of the thermal path is performed as the steel sheet entries into the heat treatment line on the first meters of the sheet in order to avoid strong process variation.

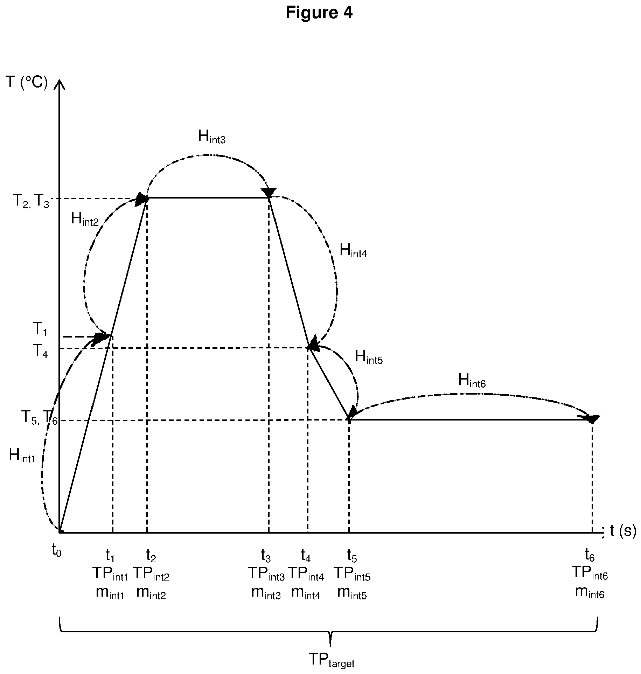

Figure 4 illustrates an example according to the invention wherein a continuous annealing is performed on a steel sheet before the deposition of a coating by hot-dip. With the method according to the present invention, after a selection of a predefined product having a microstructure close to $m_{target}$ (not shown), a $TP_x$ is calculated based on $m_i$, the selected product and $m_{target}$. In this example, intermediate thermal paths from $TP_{xint1}$ to $TP_{xint6}$, corresponding respectively to $m_{xint1}$ to $m_{xint6}$, and $H_{xint1}$ to $H_{xint6}$ are calculated. $H_x$ is determined in order to obtain $TP_x$. In this Figure, $TP_{target}$ has been selected from a multitude of $TP_x$.

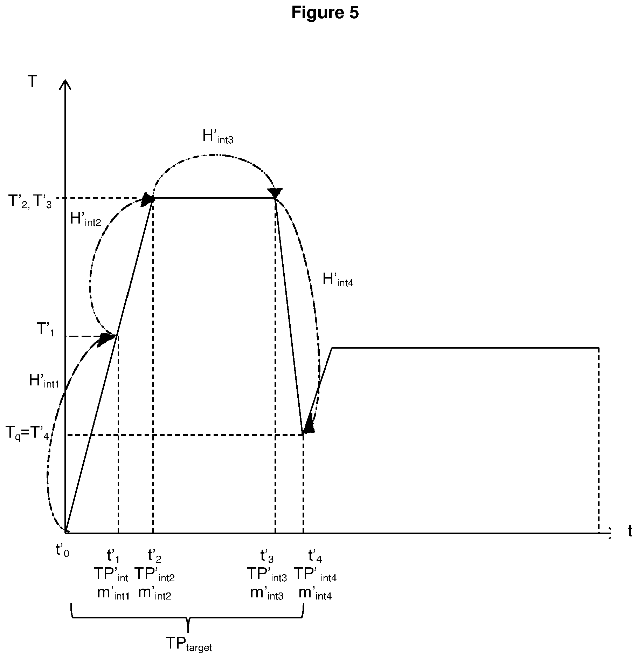

According to the present invention, $m_{target}$ can be the excepted microstructure at any time of a thermal treatment. In other words, $m_{target}$ can be the expected microstructure at the end of a thermal treatment as shown in Figure 4 or at a precise moment of a thermal treatment as shown in Figure 5. Indeed, for example, for the Q&P steel sheet, an important point of a quenching & partitioning treatment is the $T_q$, corresponding to $T'_4$ in Figure 5, which is the temperature of quenching. Thus, the microstructure to consider can be $m'_{target}$. In this case, after the application of $TP'_{target}$ on the steel sheet, it is possible to apply a predefined treatment.

With the method according to the present invention, it is possible to obtain a coil made of a steel sheet including said predefined product types include DP, TRIP, Q&P, TWIP, CFB, PHS, TRIPLEX, DUPLEX, DP HD is obtained, such coil having a standard variation of mechanical properties below or equal to 25MPa, preferably below or equal to 15MPa, more preferably below or equal to 9 MPa, between any two points along the coil. Indeed, without willing to be bound by any theory, it is believed that the method including the calculation step B.1) takes into account the microstructure dispersion of the steel sheet along the coil. Thus, $TP_{target}$ applied on the steel sheet in step B) allows for a homogenization of the microstructure and also of the mechanical properties.

Preferably, the mechanical properties are chosen from YS, UTS and elongation. The low value of standard variation is due to the precision of $TP_{target}$.

Preferably, the coil is covered by a metallic coating based on zinc or based on aluminum.

Preferably, in an industrial production, the standard variation of mechanical properties between 2 coils made of a steel sheet including said predefined product types include DP, TRIP, Q&P, TWIP, CFB, PHS, TRIPLEX, DUPLEX, DP HD measured successively produced on the same line is below or equal to 25MPa, preferably below or equal to 15MPa, more preferably below or equal to 9 MPa.

A thermally treatment line for the implementation of a method according to the present invention is used to perform $TP_{target}$. For example, the thermally treatment line is a continuous annealing furnace, a press hardening furnace, a batch annealing or a quenching line.

Finally, the present invention can be implemented using a computer program product comprising at least a metallurgical module, an optimization module and a thermal module that cooperate together to determine $TP_{target}$, such modules comprising software instructions that when implemented by a computer implement the method according to the present invention.

The metallurgical module predicts the microstructure ($m_x$, $m_{target}$ including metastable phases: bainite and martensite and stables phases: ferrite, austenite, cementite and pearlite) and more precisely the proportion of phases all along the treatment and predicts the kinetic of phases transformation.

The thermal module predicts the steel sheet temperature depending on the installation used for the thermal treatment, the installation being for example a continuous annealing furnace, the geometric characteristics of the band, the process parameters including the power of cooling, heating or isotherm power, the thermal enthalpy H released or consumed along the all thermal path when a phase transformation is performed.

The optimization module determines the best thermal path to reach $m_{target}$, i.e. $TP_{target}$ following the method according to the present invention using the metallurgical and thermal modules.

The invention will now be explained in trials carried out for information only. They are not limiting.

Examples

In this example, DP780GI having the following chemical composition was chosen:

| C (%) | Mn (%) | Si (%) | Cr (%) | Mo (%) | P (%) | Cu (%) | Ti (%) | N (%) |
|-------|--------|--------|--------|--------|-------|--------|--------|-------|
| 0.145 | 1.8 | 0.2 | 0.2 | 0.0025 | 0.015 | 0.02 | 0.025 | 0.06 |

The cold-rolling had a reduction rate of 50% to obtain a thickness of 1mm.
$m_{target}$ to reach comprised 13% of martensite, 45% of ferrite and 42% of bainite, corresponding to the following $P_{target}$ : YS of 500MPa and a UTS of 780MPa. A cooling temperature $T_{cooling}$ of 460°C had also to be reached in order to perform a hot-dip coating with a zinc bath. This temperature must be reached with an accuracy of +/- 2°C to guarantee good coatability in the Zn bath.

Firstly, the steel sheet was compared to a list of predefined products in order to obtain a selected product having a microstructure $m_{standard}$ closest to $m_{target}$. The selected product was a DP780GI having the following chemical composition:

| C (%) | Mn (%) | Si (%) |
|-------|--------|--------|
| 0.150 | 1.900 | 0.2 |

The microstructure of DP780GI, i.e. $m_{standard}$, comprises 10% martensite, 50% ferrite and 40% bainite. The corresponding thermal path $TP_{standard}$ comprises:
- a pre-heating step wherein the steel sheet is heated from ambient temperature to 680°C during 35 seconds,
- a heating step wherein the steel sheet is heated from 680°C to 780°C during 38 seconds,
- soaking step wherein the steel sheet is heated at a soaking temperature $T_{soaking}$ of 780°C during 22 seconds,
- a cooling step wherein the steel sheet is cooled with 11 jets cooling spraying $HN_x$ as follows:

| Jets | Jet 1 | Jet 2 | Jet 3 | Jet 4 | Jet 5 | Jet 6 | Jet 7 | Jet 8 | Jet 9 | Jet 10 | Jet 11 |
|------|-------|-------|-------|-------|-------|-------|-------|-------|-------|--------|--------|
| Cooling rate (°C/s) | 13 | 10 | 12 | 7 | 10 | 14 | 41 | 26 | 25 | 16 | 18 |
| Time (s) | 1.76 | 1.76 | 1.76 | 1.76 | 1.57 | 1.68 | 1.68 | 1.52 | 1.52 | 1.52 | 1.52 |
| T(°C) | 748 | 730 | 709 | 697 | 681 | 658 | 590 | 550 | 513 | 489 | 462 |
| Cooling power(%) | 0 | 0 | 0 | 0 | 0 | 0 | 58 | 100 | 100 | 100 | 100 |

- a hot-dip coating in a zinc bath à 460°C,
- the cooling of the steel sheet until the top roll during 24.6s at 300°C and
- the cooling of the steel sheet at ambient temperature.

Then, a multitude of thermal paths $TP_x$ were calculated based on the selected product DP780 and $TP_{standard}$ and $m_i$ of DP780 to reach $m_{target}$.

After the calculation of $TP_x$, one thermal path $TP_{target}$ to reach $m_{target}$ was selected, $TP_{target}$ being chosen from $TP_x$ and being selected such that $m_x$ is the closest to $m_{target}$. $TP_{target}$ comprises:
- a pre-heating step wherein the steel sheet is heated from ambient temperature to 680°C during 35 seconds,
- a heating step wherein the steel sheet is heated from 680°C to 780°C during 38s,
- soaking step wherein the steel sheet is heated at a soaking temperature $T_{soaking}$ of 780°C during 22 seconds,
- a cooling step wherein the steel sheet is cooled with 11 jets cooling spraying $HN_x$ as follows:

| Jets | Jet 1 | Jet 2 | Jet 3 | Jet 4 | Jet 5 | Jet 6 | Jet 7 | Jet 8 | Jet 9 | Jet 10 | Jet 11 |
|------|-------|-------|-------|-------|-------|-------|-------|-------|-------|--------|--------|
| Cooling rate (°C/s) | 18 | 11 | 12 | 7 | 38 | 27 | 48 | 19 | 3 | 7 | 6 |
| Time (s) | 1.76 | 1.76 | 1.76 | 1.76 | 1.57 | 1.68 | 1.68 | 1.52 | 1.52 | 1.52 | 1.52 |

(continued)

| Jets | Jet 1 | Jet 2 | Jet 3 | Jet 4 | Jet 5 | Jet 6 | Jet 7 | Jet 8 | Jet 9 | Jet 10 | Jet 11 |
|---|---|---|---|---|---|---|---|---|---|---|---|
| T(°C) | 748 | 729 | 709 | 697 | 637 | 592 | 511 | 483 | 479 | 468 | 458 |
| Cooling power(%) | 0 | 0 | 0 | 0 | 40 | 20 | 100 | 100 | 20 | 20 | 20 |

- a hot-dip coating in a zinc bath à 460°C,
- the cooling of the steel sheet until the top roll during 24.6s at 300°C and
- the cooling of the steel sheet until ambient temperature.

Table 1 shows the properties obtained with $TP_{standard}$ and $TP_{target}$ on the steel sheet:

|  | $TP_{standard}$ | $TP_{target}$ | Expected properties |
|---|---|---|---|
| $T_{cooling}$ obtained | 462°C | 458.09°C | 460°C |
| Microstructure obtained at the end of the thermal path | $X_{martensite}$: 12.83%<br>$X_{ferrite}$: 53.85%<br>$X_{bainite}$: 33.31% | $X_{martensite}$: 12.86%<br>$X_{ferrite}$: 47.33%<br>$X_{bainite}$: 39.82% | $X_{martensite}$: 13%<br>$X_{ferrite}$: 45%<br>$X_{bainite}$: 42% |
| Microstructure deviation with respect to $m_{target}$ | $X_{martensite}$: 0.17%<br>$X_{ferrite}$: 8.85%<br>$X_{bainite}$: 8.69% | $X_{martensite}$: 0.14%<br>$X_{ferrite}$: 2.33%<br>$X_{bainite}$: 2.18% | - |
| YS (MPa) | 434 | 494 | 500 |
| YS deviation with respect to $P_{target}$ (MPa) | 66 | 6 | - |
| UTS (MPa) | 786 | 792 | 780 |
| UTS deviation with respect to $P_{target}$ (MPa) | 14 | 8 | - |

Table 1 shows that with the method according to the present invention, it is possible to obtain a steel sheet having the desired expected properties since the thermal path $TP_{target}$ is adapted to each steel sheet. On the contrary, by applying a conventional thermal path, $TP_{standard}$, the expected properties are not obtained.

**Claims**

1.   A method for manufacturing a thermally treated steel sheet having a chemical steel composition and a microstructure $m_{target}$ comprising from 0 to 100% of at least one phase chosen among: ferrite, martensite, bainite, pearlite, cementite and austenite, in a heat treatment line comprising:

A. a preparation step comprising:

1) a selection sub step wherein the chemical composition and $m_{target}$ are compared to a list of predefined products, which microstructure includes predefined phases and predefined proportion of phases, in order to select a product having a microstructure $m_{standard}$ closest to $m_{target}$ and a predefined thermal path $TP_{standard}$ to obtain $m_{standard}$,
2) a calculation sub step wherein at least two thermal path $TP_x$, each $TP_x$ corresponding to a microstructure $m_x$ obtained at the end of $TP_x$, are calculated based on the selected product of step A.1) and $TP_{standard}$ and the initial microstructure $m_i$ of the steel sheet to reach $m_{target}$, the thermal enthalpy H released or consumed between $m_i$ and $m_{target}$ being calculated such that:

$$H_x = (X_{ferrite} * H_{ferrite}) + (X_{martensite} * H_{martensite}) + (X_{bainite} * H_{bainite}) +$$

$$(X_{pearlite} * H_{pearlite}) + (H_{cementite} * X_{cementite}) + (H_{austenite} * X_{austenite})$$

X being a phase fraction, all thermal cycle $TP_x$ being calculated such that

$$T(t + \Delta t) = T(t) + \frac{\left(\varphi_{Convection} + \varphi_{radiance}\right)}{\rho \cdot Ep \cdot C_{pe}} \Delta t \pm \frac{H_x}{C_{pe}}$$

with Cpe: the specific heat of the phase ($J \cdot kg^{-1} \cdot K^{-1}$), $\rho$: the density of the steel ($g.m^{-3}$), Ep: thickness of the steel (m), $\varphi$: the heat flux (convective + radiative in W), $H_x$ ($J.Kg^{-1}$), T: temperature (°C) and t: time (s),
3) an selection sub step wherein one thermal path $TP_{target}$ to reach $m_{target}$ is selected, $TP_{target}$ being chosen from $TP_x$ and being selected such that $m_x$ is the closest to $m_{target}$,

B. a thermal treatment step wherein $TP_{target}$ is performed on the steel sheet.

2. Method according to claim 1, wherein the predefined phases in step A.1) are defined by at least one element chosen from: the size, the shape, a chemical and the composition.

3. Method according to anyone of claim 1 or 2, wherein the microstructure $m_{target}$ comprises:

- 100% of austenite,
- from 5 to 95% of martensite, from 4 to 65% of bainite, the balance being ferrite,
- from 8 to 30% of residual austenite, from 0.6 to 1.5% of carbon in solid solution, the balance being ferrite, martensite, bainite, pearlite and/or cementite,
- from 1% to 30% of ferrite and from 1% to 30% of bainite, from 5 and 25% of austenite, the balance being martensite ,
- from 5 to 20% of residual austenite, the balance being martensite,
- ferrite and residual austenite,
- residual austenite and intermetallic phases,
- from 80 to 100% of martensite and from 0 to 20% of residual austenite
- 100% martensite,
- from 5 to 100% of pearlite and from 0 to 95% of ferrite and
- at least 75% of equiaxed ferrite, from 5 to 20% of martensite and bainite in amount less than or equal to 10%.

4. Method according to anyone of claims 1 to 3, wherein said predefined product types include Dual Phase, Transformation Induced Plasticity, Quenched & Partitioned steel, Twins Induced Plasticity, Carbide Free Bainite, Press Hardening Steel, TRIPLEX, DUPLEX and Dual Phase High Ductility.

5. Method according to anyone of claims 1 to 4, the differences between proportions of phase present in $m_{target}$ and $m_x$ is $\pm 3\%$.

6. Method according to anyone of claims 1 to 5, wherein in step A.2), at least one intermediate steel microstructure $m_{xint}$ corresponding to an intermediate thermal path $TP_{xint}$ and the thermal enthalpy $H_{xint}$ are calculated.

7. Method according to claim 6, wherein in step in step A.2), $TP_x$ is the sum of all $TP_{xint}$ and $H_x$ is the sum of all $H_{xint}$.

8. Method according to anyone of claims 1 to 7, wherein before step A.1), at least one targeted mechanical property $P_{target}$ chosen among yield strength YS, Ultimate Tensile Strength UTS, elongation hole expansion, formability is selected.

9. Method according to claim 8, wherein $m_{target}$ is calculated based on $P_{target}$.

10. Method according to anyone of the preceding claims wherein in step A.2), the process parameters undergone by the steel sheet before entering the heat treatment line are taken into account to calculate $TP_x$.

11. Method according to claim 10, wherein the process parameters comprise at least one element chosen from among: a cold rolling reduction rate, a coiling temperature, a run out table cooling path, a cooling temperature and a coil cooling rate.

**12.** Method according to anyone of claims 1 to 11, wherein the process parameters of the treatment line that the steel sheet will undergo in the heat treatment line are taken into account to calculate $TP_x$.

**13.** Method according to claim 12, wherein the process parameters comprise at least one element chosen from among: a specific thermal steel sheet temperature to reach, the line speed, cooling power of the cooling sections, heating power of the heating sections, an overaging temperature, a cooling temperature, a heating temperature and a soaking temperature.

**14.** A method according to anyone of the preceding claims, wherein thermal path, $TP_x$, $TP_{xint}$, $TP_{standard}$ or $TP_{target}$, comprise at least one treatment chosen from: a heating, an isotherm or a cooling treatment.

**15.** A method according to anyone of claims 1 to 14, wherein every time a new steel sheet enters into the heat treatment line, a new calculation step A.2) is automatically performed based on the selection step A.1) performed beforehand.

**16.** A method according to claim 15, wherein an adaptation of the thermal path is performed as the steel sheet entries into the heat treatment line on the first meters of the sheet.

**Patentansprüche**

**1.** Verfahren zum Herstellen eines wärmebehandelten Stahlblechs, das eine chemische Stahlzusammensetzung und ein Mikrogefüge $m_{Ziel}$ aufweist, umfassend von 0 bis 100 % mindestens einer Phase, die ausgewählt ist aus: Ferrit, Martensit, Bainit, Perlit, Zementit und Austenit, in einer Wärmebehandlungslinie, umfassend:

A. einen Vorbereitungsschritt, umfassend:

1) einen Auswahlunterschritt, bei dem die chemische Zusammensetzung und $m_{Ziel}$ mit einer Liste vordefinierter Produkte verglichen werden, wobei das Mikrogefüge vordefinierte Phasen und vordefinierte Phasenanteile beinhaltet, um ein Produkt auszuwählen, das ein Mikrogefüge $m_{standard}$ aufweist, das $m_{Ziel}$ am nächsten kommt, und einen vordefinierten thermischen Pfad $TP_{standard}$, um $m_{Standard}$ zu erlangen,
2) einen Berechnungsunterschritt, bei dem mindestens zwei thermische Pfade $TP_x$, wobei jeder $TP_x$ einem am Ende von $TP_x$ erlangten Mikrogefüge $m_x$ entspricht, basierend auf dem ausgewählten Produkt von Schritt A.1) und $TP_{standard}$ und dem anfänglichen Mikrogefüge mi des Stahlblechs berechnet werden, um $m_{Ziel}$ zu erreichen, wobei die zwischen mi und $m_{Ziel}$ freigesetzte oder verbrauchte thermische Enthalpie H berechnet wird, sodass:

$$H_x = (X_{Ferrit} * H_{Ferrit}) + (X_{Martensit} * H_{Martensit}) + (X_{Bainit} * H_{Bainit}) +$$

$$(X_{Perlit} * H_{Perlit}) + (H_{Cementit} * X_{Cementit}) + (H_{Austenit} * X_{Austenit})$$

Wobei X ist eine Phasenfraktion ist, wobei der gesamte thermische Zyklus $TP_x$ berechnet wird, sodass

$$T(t + \Delta t) = T(t) + \frac{(\varphi_{Convection} + \varphi_{radiance})}{\rho \cdot Ep \cdot C_{pe}} \Delta t \pm \frac{H_x}{C_{pe}}$$

wobei Cpe: die spezifische Wärme der Phase ($J \cdot kg^{-1} \cdot K^{-1}$), $\rho$: die Dichte des Stahls ($g.m^{-3}$), Ep: die Stärke des Stahls (m), $\varphi$: der Wärmestrom (konvektiv + strahlend in W), $H_x$ ($J.Kg^{-1}$), T: Temperatur (°C) und t: Zeit (s),
3) einen Auswahlunterschritt, bei dem ein thermischer Pfad $TP_{Ziel}$ zum Erreichen von $m_{Ziel}$ ausgewählt wird, wobei $TP_{Ziel}$ aus $TP_x$ ausgewählt wird und ausgewählt wird, sodass $m_x$ am nächsten zu $m_{Ziel}$ ist,

B. einen Wärmebehandlungsschritt, bei dem $TP_{Ziel}$ an dem Stahlblech ausgeführt wird.

**2.** Verfahren nach Anspruch 1, wobei die vordefinierten Phasen in Schritt A.1) durch mindestens ein Element definiert sind, das ausgewählt ist aus: der Größe, der Form, einer Chemikalie und der Zusammensetzung.

**3.** Verfahren nach Anspruch 1 oder 2, wobei das Mikrogefüge $m_{Ziel}$ Folgendes umfasst:

- 100 % aus Austenit,
- 5 bis 95 % Martensit, 4 bis 65 % Bainit, der Rest ist Ferrit,
- 8 bis 30 % Restaustenit, 0,6 bis 1,5 % Kohlenstoff in fester Lösung, Rest Ferrit, Martensit, Bainit, Perlit und/oder Zementit,
- zwischen 1 % und 30 % Ferrit und zwischen 1 % und 30 % Bainit, zwischen 5 und 25 % Austenit, der Rest ist Martensit,
- 5 bis 20 % Restaustenit, der Rest ist Martensit,
- Ferrit und Restaustenit,
- Restaustenit und intermetallische Phasen,
- von 80 bis 100 % Martensit und von 0 bis 20 % Restaustenit
- 100 % Martensit,
- von 5 bis 100 % Perlit und von 0 bis 95 % Ferrit und
- mindestens 75 % gleichachsiger Ferrit, 5 bis 20 % Martensit und Bainit in einer Menge von höchstens 10 %.

4. Verfahren nach einem der Ansprüche 1 bis 3, wobei die vordefinierten Produkttypen Dualphase, transformationsinduzierte Plastizität, abgeschreckter und geteilter Stahl, zwillingsinduzierte Plastizität, karbidfreier Bainit, pressgehärteter Stahl, TRIPLEX, DUPLEX und hochduktile Dualphase umfassen.

5. Verfahren nach einem der Ansprüche 1 bis 4, wobei die Unterschiede zwischen den Phasenanteilen in $m_{Ziel}$ und $m_x$ $\pm 3$ % ist.

6. Verfahren nach einem der Ansprüche 1 bis 5, **dadurch gekennzeichnet, dass** in Schritt A.2) mindestens ein Zwischenstahlgefüge, $m_{xint}$, das einem thermischen Zwischenweg $TP_{Xint}$ entspricht, und die thermische Enthalpie $H_{xint}$ berechnet werden.

7. Verfahren nach Anspruch 6, wobei in Schritt A.2) $TP_X$ die Summe aller $TP_{Xint}$ ist und $H_x$ die Summe aller $H_{xint}$ ist.

8. Verfahren nach einem der Ansprüche 1 bis 7, wobei vor Schritt A.1) mindestens eine angestrebte mechanische Eigenschaft $P_{Ziel}$ ausgewählt wird, die ausgewählt ist aus Streckgrenze YS, Zugfestigkeit UTS, Dehnungslochdehnung und Verformbarkeit.

9. Verfahren nach Anspruch 8, wobei $m_{Ziel}$ basierend auf $P_{Ziel}$ berechnet wird.

10. Verfahren nach einem der vorherigen Ansprüche, wobei in Schritt A.2) die Prozessparameter, denen das Stahlblech vor Eintritt in die Wärmebehandlungslinie unterworfen war, zum Berechnen von TPxberücksichtigt werden.

11. Verfahren nach Anspruch 10, wobei die Prozessparameter mindestens ein Element umfassen, das ausgewählt ist aus: einer Kaltwalzreduktionsrate, einer Wickeltemperatur, einem Kühlweg des Auslauftischs, einer Kühltemperatur und einer Spulenabkühlrate.

12. Verfahren nach einem der Ansprüche 1 bis 11, wobei die Prozessparameter der Behandlungslinie, die das Stahlblech in der Wärmebehandlungslinie durchläuft, zum Berechnen von $TP_X$ berücksichtigt werden.

13. Verfahren nach Anspruch 12, wobei die Prozessparameter mindestens ein Element umfassen, das ausgewählt ist aus: einer zu erreichenden spezifischen thermischen Stahlblechtemperatur, der Liniengeschwindigkeit, der Kühlleistung der Kühlabschnitte, der Heizleistung der Heizabschnitte, einer Überalterungstemperatur, einer Kühltemperatur, einer Heiztemperatur und einer Durchwärmungstemperatur.

14. Verfahren nach einem der vorherigen Ansprüche, wobei der thermische Weg, $TP_X$, $TP_{Xint}$, $TP_{Standard}$ oder $TP_{Ziel}$, mindestens eine Behandlung umfasst, die ausgewählt ist aus: einer Erwärmungs-, einer isothermen oder einer Abkühlungsbehandlung.

15. Verfahren nach einem der Ansprüche 1 bis 14, wobei jedes Mal, wenn ein neues Stahlblech in die Wärmebehandlungslinie eintritt, automatisch ein neuer Berechnungsschritt A.2) basierend auf dem zuvor ausgeführten Auswahlschritts A.1) ausgeführt wird.

16. Verfahren nach Anspruch 15, wobei eine Anpassung des thermischen Pfads durchgeführt wird, wenn das Stahlblech in die Wärmebehandlungslinie auf den ersten Metern des Blechs eintritt.

## Revendications

**1.** Procédé de fabrication d'une tôle d'acier traitée thermiquement ayant une composition chimique d'acier et une microstructure $m_{cible}$ comprenant de 0 à 100 % d'au moins une phase choisie parmi : la ferrite, la martensite, la bainite, la perlite, la cémentite et l'austénite, dans une ligne de traitement thermique comprenant :

    A. une étape de préparation comprenant :

        1) une sous-étape de sélection dans laquelle la composition chimique et $m_{cible}$ sont comparés à une liste de produits prédéfinis, dont la microstructure comprend des phases prédéfinies et une proportion prédéfinie de phases, afin de sélectionner un produit ayant une microstructure $m_{standard}$ la plus proche de $m_{cilbe}$ et un chemin thermique prédéfini $TP_{standard}$ pour obtenir $m_{standard}$,

        2) une sous-étape de calcul dans laquelle au moins deux chemins thermiques $TP_x$, chaque $TP_x$ correspondant à une microstructure $m_x$ obtenue à la fin du $TP_x$, sont calculés sur la base du produit sélectionné de l'étape A.1) et du $TP_{standard}$ et de la microstructure initiale mi de la tôle d'acier pour atteindre $m_{cible}$, l'enthalpie thermique H libérée ou consommée entre mi et $m_{cible}$ étant calculée de telle sorte que :

$$H_x = (X_{ferrite} * H_{ferrite}) + (X_{martensite} * H_{martensite}) + (X_{bainite} * H_{bainite})$$

$$+ (X_{perlite} * H_{perlite}) + (H_{cémentite} * X_{cémentite}) + (H_{austénite} * X_{austénite})$$

    X étant une fraction de phase, tout le $TP_x$ de cycle thermique étant calculé de telle sorte que

$$T(t + \Delta t) = T(t) + \frac{(\varphi_{Convection} + \varphi_{radiance})}{\rho \cdot Ep \cdot C_{pe}} \Delta t \pm \frac{H_x}{C_{pe}}$$

    avec Cpe : la chaleur spécifique de la phase ($J \cdot kg^{-1} \cdot K^{-1}$), $\rho$ : la densité de l'acier ($g.m^{-3}$), Ep : l'épaisseur de l'acier (m), $\varphi$ : le flux thermique (convectif + radiatif, en W), $H_x$ ($J.kg^{-1}$), T : la température (°C) et t : le temps (s),

        3) une sous-étape de sélection dans laquelle est sélectionné un chemin thermique $TP_{cible}$ visant à atteindre $m_{cible}$, $TP_{cible}$ étant choisi parmi les $TP_x$ et étant sélectionné de telle sorte que $m_x$ se rapproche le plus de $m_{cible}$,

    B. une étape de traitement thermique dans laquelle $TP_{cible}$ est appliqué à la tôle d'acier.

**2.** Procédé selon la revendication 1, dans lequel les phases prédéfinies à l'étape A.1) sont définies par au moins un élément choisi parmi : la taille, la forme, un produit chimique et la composition.

**3.** Procédé selon l'une quelconque de la revendication 1 ou 2, dans lequel la microstructure $m_{cible}$ comprend :

    - 100 % d'austénite,
    - de 5 à 95 % de martensite, de 4 à 65 % de bainite, le reste étant de la ferrite,
    - de 8 à 30 % d'austénite résiduelle, de 0,6 à 1,5 % de carbone en solution solide, le reste étant de la ferrite, de la martensite, de la bainite, de la perlite et/ou de la cémentite,
    - de 1 % à 30 % de ferrite et de 1 % à 30 % de bainite, de 5 à 25 % d'austénite, le reste étant de la martensite,
    - de 5 à 20 % d'austénite résiduelle, le reste étant de la martensite,
    - de la ferrite et de l'austénite résiduelle,
    - de l'austénite résiduelle et des phases intermétalliques,
    - de 80 à 100 % de martensite et de 0 à 20 % d'austénite résiduelle,
    - 100 % de martensite,
    - de 5 à 100 % de perlite et de 0 à 95 % de ferrite, et
    - au moins 75 % de ferrite équiaxe, de 5 à 20 % de martensite et de la bainite en quantité inférieure ou égale à 10 %.

**4.** Procédé selon l'une quelconque des revendications 1 à 3, dans lequel lesdits types de produit prédéfini comprennent de l'acier biphasé, à transformation induite par plasticité, de l'acier trempé et partitionné, à plasticité induite par jumelage, en bainite sans carbure, de l'acier embouti à chaud, triplex, duplex et biphasé à haute ductilité.

**5.** Procédé selon l'une quelconque des revendications 1 à 4, les différences entre les proportions de phase présentes dans $m_{cible}$ et $m_x$ sont de $\pm 3\,\%$.

**6.** Procédé selon l'une quelconque des revendications 1 à 5, dans lequel, à l'étape A.2), au moins une microstructure d'acier intermédiaire $m_{xint}$ correspondant à un chemin thermique intermédiaire $TP_{xint}$ et l'enthalpie thermique $H_{xint}$ sont calculées.

**7.** Procédé selon la revendication 6, dans lequel, à l'étape A.2), $TP_x$ est la somme de tous les $TP_{xint}$ et $H_x$ est la somme de tous les $H_{xint}$.

**8.** Procédé selon l'une quelconque des revendications 1 à 7, dans lequel, avant l'étape A.1), au moins une propriété mécanique $P_{cible}$ ciblée est sélectionnée entre la limite d'élasticité (YS), la résistance ultime à la traction (UTS), l'allongement, l'expansion de trou et la formabilité.

**9.** Procédé selon la revendication 8, dans lequel $m_{cible}$ est calculé sur la base de Pcible.

**10.** Procédé selon l'une quelconque des revendications précédentes, dans lequel, à l'étape A.2), les paramètres de procédé auxquels est soumise la tôle d'acier avant de rejoindre la ligne de traitement thermique sont pris en compte pour calculer $TP_x$.

**11.** Procédé selon la revendication 10, dans lequel les paramètres de procédé comprennent au moins un élément choisi entre un taux de réduction par laminage à froid, une température d'enroulement, un chemin de refroidissement de table de sortie, une température de refroidissement et une vitesse de refroidissement de bobine.

**12.** Procédé selon l'une quelconque des revendications 1 à 11, dans lequel les paramètres de procédé de la ligne de traitement auxquels sera soumise la tôle d'acier dans la ligne de traitement thermique sont pris en compte pour calculer $TP_x$.

**13.** Procédé selon la revendication 12, dans lequel les paramètres de procédé comprennent au moins un élément choisi entre une température spécifique de la tôle d'acier à atteindre, la vitesse de la ligne, la puissance de refroidissement des sections de refroidissement, la puissance de chauffage des sections de chauffage, une température de chauffage, une température de refroidissement, une température de chauffage et une température de trempage.

**14.** Procédé selon l'une quelconque des revendications précédentes, dans lequel le chemin thermique, $TP_X$, $TP_{Xint}$, $TP_{standard}$ ou $TP_{cible}$, comprend au moins un traitement choisi parmi : un traitement de chauffage, un traitement isotherme ou un traitement de refroidissement.

**15.** Procédé selon l'une quelconque des revendications 1 à 14, dans lequel chaque fois qu'une nouvelle tôle d'acier entre dans la ligne de traitement thermique, une nouvelle étape de calcul A.2) est automatiquement réalisée sur la base de l'étape de sélection A.1) réalisée au préalable.

**16.** Procédé selon la revendication 15, dans lequel une adaptation du chemin thermique est réalisée lors de l'entrée de la tôle d'acier dans la ligne de traitement thermique sur les premiers mètres de la tôle.

# Figure 1

**Figure 2**

**Figure 3**

**Figure 4**

**Figure 5**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2010049600 A

- JP H1036923 B